# EUROPEAN PATENT SPECIFICATION

(11) **EP 2 866 130 B1**
(45) Date of publication and mention of the grant of the patent: **14.06.2017**
(21) Application number: 13806862.2
(22) Date of filing: 21.06.2013
(51) Int. Cl.: G06F 3/0488, G06F 9/44

(54) **ACTIVATION OF AN APPLICATION ON A PROGRAMMABLE DEVICE USING GESTURES ON AN IMAGE**
AKTIVIERUNG EINER ANWENDUNG AUF EINER PROGRAMMIERBAREN VORRICHTUNG DURCH GESTEN AUF EINEM BILD
ACTIVATION D'UNE APPLICATION DANS UN DISPOSITIF PROGRAMMABLE AU MOYEN DE GESTES EFFECTUÉS SUR UNE IMAGE

(30) Priority: 22.06.2012 ES 201230981
(43) Date of publication of application: 29.04.2015
(73) Proprietor: CRAMBO SA, 28850 Torrejón de Ardoz (ES); GARCíA MANCHADO, Nilo, 28850 Torrejón de Ardoz (ES)
(72) Inventor: GARCIA MANCHADO, Nilo, 28850 Torrejón de Ardoz (ES)
(74) Representative: Sahuquillo Huerta, Jesús
(86) International application number: PCT/ES2013/070409
(87) International publication number: WO 2013/190166

(56) References cited:
- CN-A- 102 207 825
- US-A- 6 005 575
- US-A1- 2007 150 842
- US-A1- 2008 168 403
- US-A1- 2008 222 545
- US-A1- 2011 252 357
- US-A1- 2012 081 267
- US-A1- 2012 139 857

## Description

The present invention relates to a user interface used in touch screens in portable electronic devices, and more particularly, to a method for activating applications on a portable electronic device.

### State of the art

The touch screens are in common use today and well known in the state of the art. This type of screens is used in many electronic devices to display graphics and text as well as to provide a user interface through which a user may interact with the devices. A touch screen detects and responds to contact on said touch screen. A device may contain one or more applications, menus, and other user-interface objects programmed inside and accessible by means of the touch screen, by contacting the screen at locations corresponding to the user-interface objects with which he/she wishes to interact.

Over time, the evolution of the user interaction with the device has complicated the access thereto by inexperienced users. Thus, depending on the operating system used, both the access and the use of said device, vary substantially. Therefore, it is a technical problem to be solved facilitating the interaction with the user, avoiding the problems derived from the unintentional activation of the application or eliminating the access problems between different operating systems, creating a universal and intuitive access for the different applications regardless of which operating system are implemented.

To prevent unintentional accesses, most of them by options for locking and unlocking the touch screen itself, as document WO 2004/001560, by pressing sequentially a predefined set of buttons. However, the present invention is not related to the direct lock of the screen, but to the access to the different applications contained on the device and on which the user must interact.

The document ES 2 338 370 describes a method for moving an unlock image along a pre-defined path on the touch screen in accordance with the contact, in which the unlock image is a graphical, interactive user-interface object with which the user interacts in order to unlock the device.

However, this document, despite simplifying the unlocking, does not enable the access individualized to each application that can be programmed within the application, being limited to enable or disable the touch screen.

### Description of the invention

As stated, there are known in the state of the art many systems to interact with a programmable device that are easy-to-use, such as the "double click" on an icon, but that in some cases it can not be all intuitive that one desires and that, furthermore, can be very difficult to manage without knowing the layout of the user interface. The present invention solves this problem with the help of an image that slides on a path and which, when interacting with it, allows the access to the content or application it is related to.

The technical problem which the present invention solves is that derived from the unintentional activation of an application on a portable electronic device. In most cases, the icons of said applications that appear as accesses in the user interface do not give enough information for identifying the functionality of the application. This results in the user, simply to know which application is executed, with the computational cost (percentage of processor performance) and its derivative, the energy cost (the greater consumption of computational resources, the greater consumption of battery) which reduces the autonomy of the device and causes inefficiencies in the operation (the device memory and computing capacity is usually reduced and limited to a small number of applications). For this reason, it is necessary an interface that avoids these unwanted or unnecessary accesses by the user.

More specifically, in a first aspect of the invention, it is described a computer-implemented method in order to control a programmable electronic device having a touch screen, and comprising the steps of:
i. detecting contact with the touch screen when the device is in a user interface unlocked state, identifying the application of the user interface corresponding to the contact position,
ii. transitioning the application from an idle state to an active state if the detected contact corresponds to a pre-defined gesture,
iii. maintaining the application idle if the desired contact does not correspond to the pre-defined gesture, such that the transition is carried out by the movement of an activation image along a pre-defined path on the screen according to the contact, in which the activation image is a user interface interactive graphic object whereby during the movement of the activation object along the pre-defined path, a second identification object is displayed at a second level, characterised in that the application is closed by transitioning the activation image in the opposite direction to the activation path.

In another particular embodiment, the identification object is displayed in a plane lateral and parallel to that of the activation image.

In a second aspect of the invention, it is claimed a portable electronic device comprising a touch screen, at least a processor, at least a memory, and at least one computer application stored in said memory and configured to be executed by the processors on an operating system, and where said application includes instructions for:
i. detecting contact with the touch screen when the device is in a user interface unlocked state, identifying the application of the user interface corresponding to the contact position,
ii. transitioning the application from an idle state to an active state if the detected contact corresponds to a pre-defined gesture,
iii. maintaining the application idle if the desired contact does not correspond to the pre-defined gesture, such that the transition is carried out by the movement of an activation image along a pre-defined path on the screen according to the contact, in which the activation image is a user interface interactive graphic object which during the movement of the activation object along the pre-defined path, a second identification object is displayed at a second level and characterised in that the application is closed by transitioning the activation image in the opposite direction to the activation path. Finally, in a third aspect of the invention, it is claimed a computer program with instructions configured for running by at least one processor which, when executed by the portable electronic device described, make this carries out the method object of the invention.

In the present specification, by identification object is meant an image, video or element characteristic and identifying of the application which it is associated with.

Thanks to the method, device and computer program described it is possible to solve the technical problem of the individualised activation and identification of each application on a mobile device, avoiding the problems of unintentional or unidentified accesses.

Throughout the description and claims, the word "comprises" and its variations are not intended to exclude other technical features, additives, components or steps. For those skilled in the art, other objects, advantages and characteristics of the invention will emerge in part from the description and in part from the practice of the invention. The following examples and drawings are provided by way of illustration, and are not intended to be limiting of the present invention. Furthermore, the present invention covers all the possible combinations of particular and preferred embodiments herein indicated.

### Brief Description of the Figures

Described very briefly hereinafter are a series of drawings that help to better understand the invention and which are expressly related to an embodiment of said invention that is presented as a non-limiting example thereof.
Figure 1 shows a block diagram of the portable electronic device object of the present invention.
Figure 2 shows a flow diagram of the method object of the present invention.
Figure 3 shows a sequence of activation of an application within a device like the one shown in Figure 1, wherein Figure 3a shows the application in inactive state, the Figure 3b shows the application at an intermediate state, without opening the application completely, and Figure 3c with the application fully activated.

### Preferred embodiment of the invention

The relationship with the menus in the computer systems to interact with portable electronic devices has evolved considerably with the passage of time. However, in some cases it is difficult until the way in which the interface processes the order is known. Thus, for example, the order of running a program or computer application sometimes is by a double click, while of closing it, in others, it involves placing the finger on the application for several seconds so that, subsequently, the icon trembles with an "x" above to be pressed. All these conducts are generally unknown to new users, since they are not related to common actions in their conduct.

To solve this problem, the present invention solves this problem with the help of an image that slides on a path and which, when interacting with it, allows the access to the content or application it is related to. In a particular realization, this image is a buckle with a zipper, such that, when pressing with the finger on the buckle and try to unzip it, the content or application that is under is accessed, for which it implements two layers, one outer that allows identifying that it is a zipper and that can identify the layer of the program or operating system in which the user is at that time, and a second lower layer that identifies the destination of that action, which is what the zipper, once open, allows viewing. For example, if it is a GPS application, it is possible to offer an image of a map in the inner layer, and when unzipping, activate the navigation application. In addition, it can also happen that the user wants to close the application, which is solved with the simple act of touching the buckle (the first image) and move it in the opposite direction.

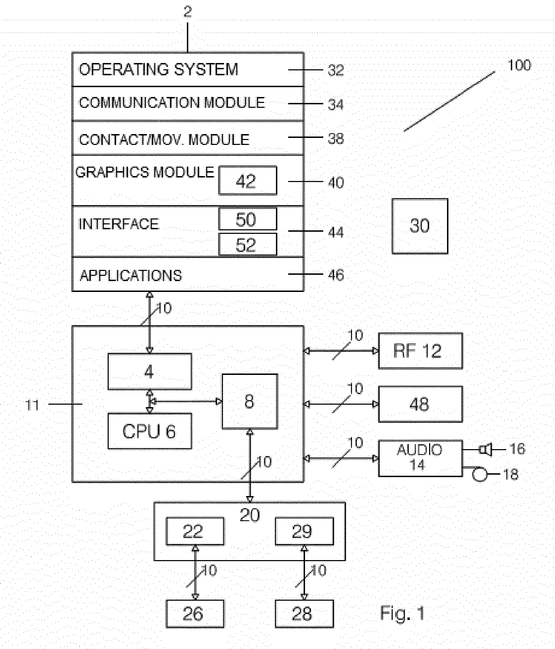

With reference to the attached figures, Figure 1 illustrates a portable electronic device, according to a practical embodiment of the invention. The device 100 includes a memory 2, a memory controller 4, at least a processor 6 (a central processing unit, CPU), a peripherals interface 8, RF circuitry 12, audio circuitry 14, a speaker 16, a microphone 18, an input/output (I/O) subsystem 20, a touch screen 26, other input or control elements 28, and an external port 48. These components communicate over the one or more communication buses 10.

The portable electronic device can be any, including, although not limited to, mobile phones, tablets, laptops and in general any portable electronic device comprising at least a touch screen with which interacts with the user, and with a capacity to run applications or computer software on an operating system. The various elements of the portable electronic device 100 may be implemented in hardware, software or a combination of both, including all the necessary elements, such as application specific integrated circuits and signal processing means.

The memory 2 may include a high speed random access memory and/or a non-volatile memory. In some embodiments, said memory may further remotely located, communicating through a communications network which is not shown.

The peripherals interface 8 couples the input and output peripherals of the device 100 to the CPU 6 and the memory 2. The CPU processor 6 runs various software applications and/or set of instructions stored in said memory 2 to perform various functions for the device 100 and to process data.

The touch screen 26 provides an output interface and an input interface between the device and a user. The controller 22 of the touch-screen 26 receives and sends the electrical signals from/to the above touch screen 26 which displays the visual output to the user. This visual output may include text, graphics, video, and any combination thereof. This visual output includes part or all the applications resident on the mobile device 100.

The touch screen 26 also accepts input from the user based on contact, since it forms a touch-sensitive surface that accepts user input. The touch screen 26 and the touch screen controller 22 (along with any associated modules and/or sets of instructions in the memory 2) detects contact (and any movement or break of the contact) on the touch screen 26 and converts the detected contact into interaction with user-interface objects, such as one or more soft keys, that are displayed on the touch screen. By way of example, a point of contact between the touch screen 26 and the user corresponds to one or more digits of the user. The touch screen 26 and the touch screen controller 22 can detect the contact and any movement or lack thereof using any one of a plurality of contact sensitivity technologies. The touch screen 26 may have a resolution in excess of 100 dpi. The user may make contact with the touch screen 26 using any suitable object or appendage, such as a stylus, finger, and so forth.

The device 100 also includes a power system 30 for the various components. The software components include an operating system 32, a communication module, or set of instructions, 34, a contact/motion module, or set of instructions, 38, a graphics module, or set of instructions, 40, a user interface state module, or set of instructions, 44, and one or more applications, or set of instructions, 46.

The contact/motion module 38 may detect contact with the touch screen 26 in conjunction with the touch screen controller 22. The contact/motion module 38 includes various software components for performing various operations related to detection of contact with the touch screen 22, such as determining if contact has occurred, determining if there is movement of the contact and tracking the movement across the touch screen, and determining if the contact has been interrupted (that is, if the contact has ceased). Determining movement of the point of contact may include determining speed (magnitude), velocity (magnitude and direction), and/or an acceleration (including a change in magnitude and/or direction) of the point of contact.

The graphics module 40 includes various known software components for rendering and displaying graphics on the touch screen 26. Note that the term "graphics" includes any object that can be displayed to a user, including without limitation text, web pages, icons (such as user-interface objects including soft keys), digital images, videos, animations and the like.

The graphics module 40 includes an optical intensity module 42. The optical intensity module 42 controls the optical intensity of graphical objects, such as user-interface objects, displayed on the touch screen 26. Controlling the optical intensity may include increasing or decreasing the optical intensity of a graphical object. In some embodiments, the increase or decrease may follow predefined functions.

The user interface state module 44 controls the user interface state of the device 100. The user interface state module 44 may include a lock module 50 and an unlock module 52. The lock module detects satisfaction of any of one or more conditions to transition the device 100 to a user-interface lock state and to transition the device 100 to the lock state. The unlock module detects satisfaction of any of one or more conditions to transition the device to a user-interface unlock state and to transition the device 100 to the unlock state. Further details regarding the user interface states are described below. The one or more applications 30 include any applications installed on the device 100.

The device 100 is a device where operation of a predefined set of functions on the device is performed exclusively through the touch screen 26. By using the touch screen as the primary input/control device for operation of the device 100, the number of physical input/control devices (such as push buttons, dials, and the like) on the device 100 may be reduced. The predefined set of functions that are performed exclusively through the touch screen and the touchpad include navigation between user interfaces.

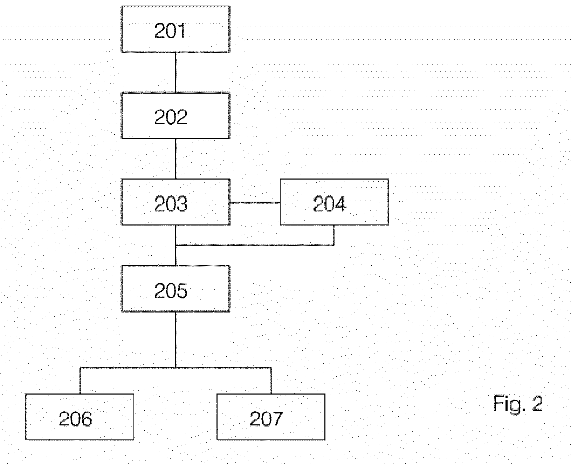

Figure 2 shows a flow diagram of the activation process of the invention to configure a transition from a state of inactive application to a status of active application. The process may be, as recited by the invention, perceived by the user in an instantaneously, gradually, or at any suitable rate, depending on the contact of the user itself. While the method flow 300 includes a plurality of operations that appear to occur in a specific order, it should be apparent that these processes can include more or fewer operations, which can be executed serially or in parallel.

The device is set to the lock state 201. As described in the state of the art, the transition from lock to unlock in a mobile device include events such as the elapsing of a period of time, entry into an active call, or the powering on the device, or the user intervention.

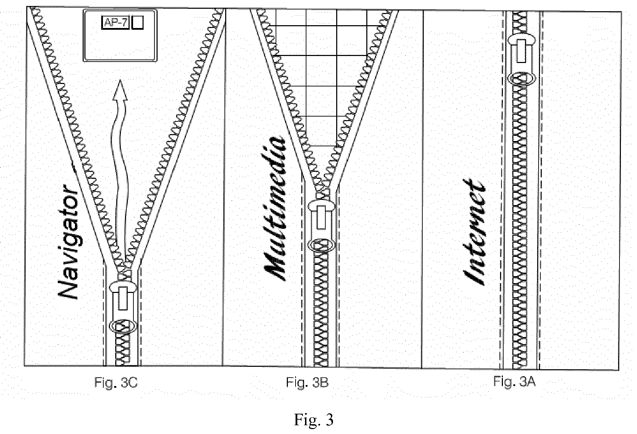

In a first state, the touch screen 26 displays at least an application with a first image indicative of the idle state of said application 202. In a particular realization, a zipper closed (Figure 3a).

The action of changing to the active state of the application includes the contact with touch screen 26. This change from inactive state to active state includes a predefined gesture on the touch screen. As used herein, a gesture is a motion of the object/appendage making contact with said touch screen. For example, in this embodiment, the predefined gesture includes the contact with the touch screen on the activation image (the zipper) in order to initialize the gesture. Subsequently, a vertical or horizontal movement 203 (depends on the programmed orientation) from the point of contact (the zipper's buckle) to the opposite edge (reproducing the opening of said zipper) while maintaining continuous contact with the touch screen, and the breaking of the contact at the opposite edge to complete the gesture and activate the application.

During the cited activation movement 203, in the second level or layer, an image indicative of the application that is activated (as shown in the sequence of figures 3b and 3c) is gradually shown 204, so that during the movement 203, the user has the ability to discern 205 if the selected application is the correct 206 or not 207 without opening the application and, as a result, reducing the consumption of battery, derived from the consumption of resources of having open an application resident into the memory without any need.

For convenience of explanation, contact on the touch screen in the process 200 will be described as performed by the user using at least one hand using one or more fingers. However, it should be appreciated that the contact may be made using any suitable object or appendage, such as a stylus, finger, etc. The contact may include one or more taps on the touch screen, maintaining continuous contact with the touch screen, movement of the point of contact while maintaining continuous contact, a breaking of the contact, or any combination thereof.

Thus, the device will detect the contact on the touch screen. If the contact does not correspond to an attempt to perform the activation action, or if the contact corresponds to a failed or aborted attempt of activation, then the application remains inactive. For example, if the activation action is a vertical movement of the point of contact across the touch screen while maintaining continuous contact with the touch screen, and the detected contact is a series of random taps on the touch screen, then the application will remain inactive because the contact does not correspond to the activation action.

If the contact corresponds to a successful performance of the activation action, i.e., the user performed the activation action, the device transitions to the activation state of the selected application. For example, if the activation action is a vertical movement of the point of contact across the touch screen while maintaining continuous contact with the touch screen, and the detected contact is the horizontal movement with the continuous contact, then the device transitions to the unlock state.

It must be taken into account that if the activation action is a predefined gesture, the application may begin the process of transitioning to the activate state as soon as it detects the initial contact of the gesture and continues the progression of the transition as the gesture is performed. If the user aborts the gesture before it is completed, the device aborts the transition and remains in the lock state. If the gesture is completed, the application completes the transition to the active state and becomes activated. As another example, if the activation action is a vertical movement of the point of contact across the touch screen while maintaining continuous contact with the touch screen, and the user taps the touch screen once, the device begins the process of the state transition as soon as it detects the tap but also aborts the process soon after because it realizes that the tap is just a tap and does not correspond to the activation action.

While the device is activated, the device may display on the touch screen user-interface objects corresponding to one or more functions of the device and/or information that may be of interest to the user. The user may interact with the user-interface objects by making contact with the touch screen at one or more touch screen locations corresponding to the interactive objects with which he/she wishes to interact. The device detects the contact and responds to the detected contact by performing the operation corresponding to the interaction with the interactive object.

## Claims

1. Method carried out by a computer in order to control a programmable electronic device (100) having a touch screen (26), and said method comprising the steps of:
i. detecting contact with the touch screen when the device is in a user interface unlocked state, identifying the application of the user interface corresponding to the contact position;
ii. transitioning the application from an idle state to an active state if the detected contact corresponds to a pre-defined gesture; and
iii. maintaining the application idle if the desired contact does not correspond to the pre-defined gesture;
such that the transition is carried out by the movement of an activation image along a pre-defined path on the screen according to the contact, in which the activation image is a user interface interactive graphic object whereby during the movement of the activation image along the pre-defined path, a second identification object is displayed at a second level, and **characterised in that** the application is closed by transitioning the activation image in the opposite direction to the activation path.

2. Method according to claim 1, wherein the identification object is further displayed in a plane lateral and parallel to that of the activation image.

3. Portable electronic device (100) comprising a touch screen (26), at least a processor (6), at least a memory (2), and at least one computer application stored in said memory and configured to be executed by the processor (6) on an operating system, and where said application includes instructions for:
i. detecting contact with the touch screen when the device is in a user interface unlocked state, identifying the application of the user interface corresponding to the contact position;
ii. transitioning the application from an idle state to an active state if the detected contact corresponds to a pre-defined gesture; and
iii. maintaining the application idle if the desired contact does not correspond to the pre-defined gesture;
such that the transition is carried out by the movement of an activation image along a pre-defined path on the screen according to the contact, in which the activation image is a user interface interactive graphic object which during the movement of the activation image along the pre-defined path, a second identification object is shown at a second level, and **characterised in that** the application is closed by transitioning the activation image in the opposite direction to the activation path.

4. Computer program with instructions configured for execution by at least one processor (6), which when are executed by the portable electronic device (100) of claim 3, cause it to perform the method of any of claims 1 or 2.

## Patentansprüche

1. Verfahren, welches von einem Computer durchgeführt wird, um eine programmierbare elektronische Vorrichtung (100), welche einen Berührungsbildschirm (26) aufweist, zu steuern, und wobei das genannte Verfahren folgende Schritte umfasst:
i. das Erfassen des Kontakts mit dem Berührungsbildschirm, wenn sich die Vorrichtung in einem entsperrten Zustand der Benutzerschnittstelle befindet, unter Identifizierung der Anwendung der Benutzerschnittstelle, welche der Kontaktposition entspricht;
ii. die Durchführung des Überganges der Anwendung von einem inaktiven Zustand zu einem aktiven Zustand, wenn der erfasste Kontakt einer vordefinierten Geste entspricht; und
iii. das Halten der Anwendung in dem inaktiven Zustand, wenn der gewünschte Kontakt nicht der vordefinierten Geste entspricht;
so dass der Übergang mittels der Bewegung eines Aktivierungsbildes entlang eines vordefinierten Weges auf dem Bildschirm gemäß dem Kontakt durchgeführt wird, in welchem das Aktivierungsbild ein interaktives grafisches Objekt der Benutzerschnittstelle ist, wodurch während der Bewegung des Aktivierungsbildes entlang des vordefinierten Weges ein zweites Identifizierungsobjekt auf einer zweiten Ebene angezeigt wird, und **dadurch gekennzeichnet, dass** die Anwendung mittels des Übergangs des Aktivierungsbildes in die dem Aktivierungsweg entgegengesetzte Richtung geschlossen wird.

2. Verfahren nach Anspruch 1, wobei das Identifizierungsobjekt zusätzlich in einer seitlichen Ebene, welche darüber hinaus parallel zur Ebene des Aktivierungsbildes ist, angezeigt wird.

3. Tragbare elektronische Vorrichtung (100) umfassend einen Berührungsbildschirm (26), mindestens einen Prozessor (6), mindestens einen Speicher (2), und mindestens eine in diesem Speicher gespeicherten Computeranwendung, welche darüber hinaus dazu ausgebildet ist, mittels des Prozessors (6) auf einem Betriebssystem ausgeführt zu werden, und wobei die genannte Anwendung Befehle für die folgende Schritte miteinbezieht:
i. das Erfassen des Kontakts mit dem Berührungsbildschirm, wenn sich die Vorrichtung in einem entsperrten Zustand der Benutzerschnittstelle befindet, unter Identifizierung der Anwendung der Benutzerschnittstelle, welche der Kontaktposition entspricht;
ii. die Durchführung des Überganges der Anwendung von einem inaktiven Zustand zu einem aktiven Zustand, wenn der erfasste Kontakt einer vordefinierten Geste entspricht; und
iii. das Halten der Anwendung in dem inaktiven Zustand, wenn der gewünschte Kontakt nicht der vordefinierten Geste entspricht;
so dass der Übergang mittels der Bewegung eines Aktivierungsbildes entlang eines vordefinierten Weges auf dem Bildschirm gemäß dem Kontakt durchgeführt wird, in welchem das Aktivierungsbild ein interaktives grafisches Objekt der Benutzerschnittstelle ist, wodurch während der Bewegung des Aktivierungsbildes entlang des vordefinierten Weges ein zweites Identifizierungsobjekt auf einer zweiten Ebene angezeigt wird, und **dadurch gekennzeichnet, dass** die Anwendung mittels des Übergangs des Aktivierungsbildes in die dem Aktivierungsweg entgegengesetzte Richtung geschlossen wird.

4. Computerprogramm mit Befehlen, welche dazu ausgebildet sind, mittels mindestens eines Prozessors (6) ausgeführt zu werden, welche, wenn sie von der tragbaren elektronischen Vorrichtung (100) nach Anspruch 3 ausgeführt werden, bewirken, dass diese das Verfahren einer der Ansprüche 1 oder 2 durchführt.

## Revendications

1. Procédé mis en oeuvre par un ordinateur afin de contrôler un dispositif électronique programmable (100) ayant un écran tactile (26), et ledit procédé comprenant les étapes de :
i. détection de contact avec l'écran tactile lorsque le dispositif est dans un état déverrouillé d'interface utilisateur, identifiant l'application de l'interface utilisateur correspondant à la position de contact ;
ii. transition de l'application depuis un état inactif à un état actif si le contact détecté correspond à un geste prédéfini ; et
iii. maintien de l'application inactive si le contact voulu ne correspond pas au geste prédéfinie ;
de manière que la transition est mise en oeuvre par le mouvement d'une image d'activation le long d'une trajectoire prédéfinie sur l'écran selon le contact, dans lequel l'image d'activation est un objet graphique interactif d'interface utilisateur de sorte que pendant le mouvement de l'image d'activation le long de la trajectoire prédéfinie, un deuxième objet d'identification est affiché à un deuxième niveau et **caractérisé en ce que** l'application est fermée par la transition de l'image d'activation dans la direction opposée à la trajectoire d'activation.

2. Procédé selon la revendication 1, dans lequel l'objet d'identification est en outre affiché dans un plan latéral et parallèle à celui de l'image d'activation.

3. Dispositif électronique portable (100) comprenant un écran tactile (26), au moins un processeur (6), au moins une mémoire (2), et au moins une application informatique stockée dans ladite mémoire et configurée pour être exécutée par le processeur (6) sur un système d'exploitation, et dans lequel ladite application comporte des instructions pour :
i. la détection de contact avec l'écran tactile lorsque le dispositif est dans un état déverrouillé d'interface utilisateur, identifiant l'application de l'interface utilisateur correspondant à la position de contact ;
ii. la transition de l'application depuis un état inactif à un état actif si le contact détecté correspond à un geste prédéfini ; et
iii. le maintien de l'application inactive si le contact voulu ne correspond pas au geste prédéfini ;
de manière que la transition est mise en oeuvre par le mouvement d'une image d'activation le long d'une trajectoire prédéfinie sur l'écran selon le contact, dans lequel l'image d'activation est un objet graphique interactif d'interface utilisateur de sorte que pendant le mouvement de l'image d'activation le long de la trajectoire prédéfinie, un deuxième objet d'identification est montré à un deuxième niveau, et **caractérisé en ce que** l'application est fermée par la transition de l'image d'activation dans la direction opposée à la trajectoire d'activation.

4. Programme informatique avec des instructions configurées pour l'exécution par au moins un processeur (6), qui lorsqu'elles sont exécutées par le dispositif électronique portable (100) de la revendication 3, elles ont menées à mettre en oeuvre le procédé de l'une quelconque des revendications 1 ou 2.
